# EUROPEAN PATENT SPECIFICATION

(11) **EP 1 163 642 B1**
(45) Date of publication and mention of the grant of the patent: **28.08.2002**
(21) Application number: 00920560.0
(22) Date of filing: 22.03.2000
(51) Int. Cl.: G06T 5/00

(54) **A METHOD FOR IDENTIFYING CLOSED AREAS AND DEFINING MASKS IN A DIGITAL IMAGE**
VERFAHREN ZUR IDENTIFIZIERUNG GESCHLOSSENER BILDBEREICHE UND ZUR DEFINITION VON MASKEN IN EINEM DIGITALEN BILD
PROCEDE D'IDENTIFICATION D'ESPACES FERMES ET DE DEFINITION DE MASQUES DANS UNE IMAGE NUMERISEE

(30) Priority: 24.03.1999 IT BO990137
(43) Date of publication of application: 19.12.2001
(73) Proprietor: Corob International AG, 5000 Aarau (CH)
(72) Inventor: FERRETTI, Ilic, I-42042 Fabbrico (IT); CASARINI, Paolo, I-41100 Modena (IT)
(74) Representative: Provvisionato, Paolo
(86) International application number: EP0002593
(87) International publication number: WO00057358

(56) References cited:
- EP-A- 0 505 077
- EP-A- 0 977 151
- US-A- 5 181 261

## Description

The present invention relates to the processing of images in general, and in particular to systems for processing digital images.

The invention has been developed with particular reference to a method for identifying closed areas and defining corresponding masking zones with respect to the contours of objects depicted in a complex image, for instance the image of a building or of the interior of furnished premises.

An increasing number of applications require the masking of specific zones of a digital image for subsequent processing, for instance in order to cut out specific images from the image, or to modify the colour or the shape of particular objects, leaving the remainder of the image unchanged, or vice versa. A widely known system is the "croma-key" system. This system, of analog type, makes it possible to remove those areas having a predetermined colour from an image and is often used to superimpose the image of a person on a background selected at will.

The croma-key system and its drawbacks, and a system for remedying these drawbacks with reference to the processing of a digital image, are set out in detail in US Patent US-A-5 469 536. This patent discloses a method of image processing with a masking facility that remedies the problems of the conventional croma-key system and makes it possible to define, from the digital image of a person on a substantially uniform background, the contour separating the person and this background, so as to be able to remove those portions of the image, i.e. the background itself, located outside the contour. In this way, the resulting image can be superimposed on a background of different type previously input and stored in digital form in the memory of an electronic processor. The method by which the contour is identified consists in organising the points of the digital image in successive rows and analysing the colour of these points in succession until, for each line, there is a difference between the chromatic hue values of two adjacent points that is greater than a predetermined threshold. One of the two points at which such a difference in chromatic hue is detected is therefore defined as belonging to the background and the other to the image to be masked. The method takes place simultaneously for the right-hand and left-hand side of the image.

The method disclosed in the Patent US-A-5 469 536 has the drawback that the background of the digital image necessarily has to be of a substantially uniform colour. Moreover, this system can locate only the contour of convex images, for instance the image of a person's face. The method is unable to locate the contour of concave objects that have zones with recesses, niches or hollows. The method is unable, moreover, correctly to detect the contours of a plurality of objects depicted in an image, when these are partially superimposed or have their respective contours entirely enclosed within one another. A further drawback lies in the fact that the method is unable to detect any holes or cut-outs in the image to be masked which, for instance, allow the background to be seen or to show through zones contained within the outermost contour of an object.

Various solutions have been proposed to remedy the above-mentioned problems, which require varying degrees of interaction with a user, for instance roughly to define a vicinity of the image in which to search for the contour of a figure, or to define, in a limited zone of the image, the difference between chromatic hues representative of the background and the figure respectively. An example of these user-guided masking procedures is the masking product known by the trade name Mask Pro marketed by the Extensis Corporation as described as the Internet address http://www.extensis.com/.

Although the above-mentioned systems make it possible to achieve precise masking results, they are intended, however, for professional use and require substantial experience of use, in addition to the fact that the identification of closed areas in a complex image and their masking is generally time-consuming.

Alternative solutions to the problem of object masking are known, for instance, from US-A-5 181 261, according to which seed pixels are randomly selected from designated areas and accordingly labelled; in an object area growing process, neighbouring pixels are also so labelled if they minimize the distance with the seed pixels in a n-dimensional feature space.

The former document also mentions additional prior art document JP-A-62-219 179, in which edges are extracted as closed edge loops by differential processing.
Further alternative solutions are based on the analysis of vertical and horizontal histograms of the pixel intensity calculated for one or more colour channels, cf. EP-A-0 505 077.

Among others, an application of particular interest of masking systems is in the sector of so-called tintometric systems, in which a metering machine supplies predetermined quantities of one or more colouring agents concentrated within a container containing a base product of uniform colour, in most cases white or transparent, in order to obtain a final paint of the desired colour. In this sector, it is increasingly necessary to be able to provide potential customers with an advance idea of the result that could be obtained with the final paint when it is for instance applied to objects or types of furnishings, or when it is used to paint the wails of a room or even the outside of a building. Techniques are known in this respect for displaying the final colour of a paint, on the basis of parameters identifying this paint, on the screen of a electronic processor.

Merely displaying the final paint colour in advance is often not enough, however, to give an idea of the final result and it is becoming increasingly necessary to show potential customers what effect this paint will have when applied to a particular object. The object of the present invention is to provide a processing system for a digital image that makes it possible to rapidly and simply identify the contours of figures within this image, in order to be able to mask these figures independently from one another and from the surrounding background zones. A further object of the invention is to provide a system of the above-mentioned type that can work in combination with a tintometric system, and in particular with a colouring agent metering device, in order to provide as output a paint of a desired colour. The possibility of using, for the application of the system of the present invention, the same electronic processor adapted to control this colouring agent metering machine, is particularly useful in this respect.

In order to achieve these objects, the invention relates to the method as set out in the accompanying claims.

As a result of the present invention, potential customers may for instance go to a sales point that uses a tintometric system, with an image depicting the object, room or building whose colour they wish to change. If this image is not already in digital format, it can be converted into this format, for instance using a scanner, and input into an electronic processor, preferably the same processor used to control the paint metering machine. Once the image has been input, the system of the present invention identifies the contours of closed areas within the image, corresponding to the contours of objects depicted therein. The customer can then use an inputting system, for instance a keyboard, a mouse, a joystick or the like, to interact with specific figures selected and masked within this image and displayed on a video screen, or with the areas external thereto, for instance in order to modify the colour of the walls of a room without changing the colour of the furnishings visible in the image.

Further characteristic features and advantages of the present invention are set out in the following description of a preferred embodiment thereof, given by way of non-limiting example, and made with reference to the accompanying drawings, in which:
Fig. 1 is an example of an image converted into grey tones for the application of the method of the present invention;
Fig. 2 is a representation of the image of Fig. 1, at the end of processing by an edge-detection algorithm and of a possible border closure cycle,
Fig. 3 is a representation of the image of Fig. 2, after removal of the dead branches of the borders detected;

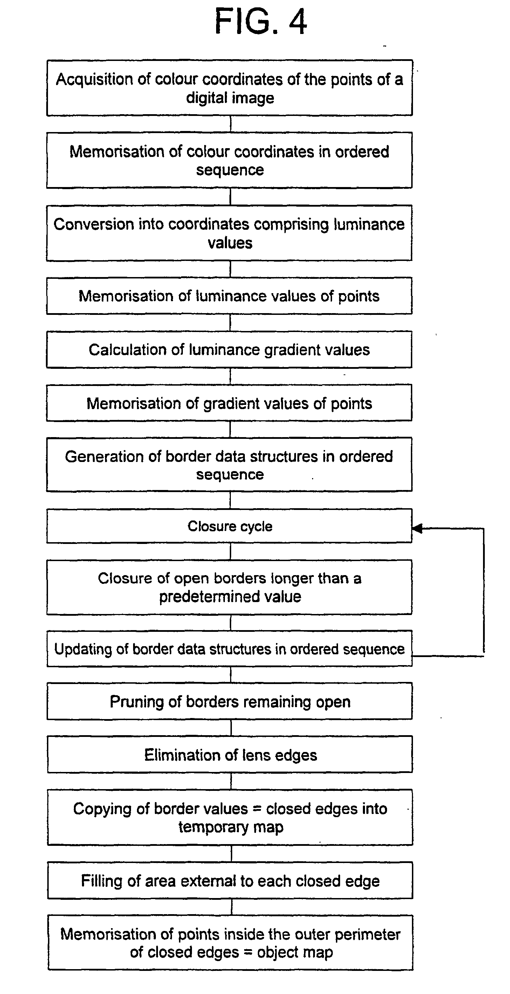

Fig. 4 is a block diagram of the method of the present invention;
Fig. 5 shows diagrammatic examples of relationships between the point of a detected border and the neighbouring points or clusters of points;
Fig. 6 shows an example of closed edges identified during the method of the present invention;
Fig. 7 shows an example of the stage of filling of the zones external to a closed edge, in order to identify a closed masking area.

The method of the present invention is adapted to work in combination with an electronic processor comprising a memory, a display unit or video screen, and an inputting device such as a keyboard, mouse, joystick or the like. The electronic processor is preferably, although in a non-limiting manner, connected to an image data acquisition device such as a scanner. The electronic processor is optionally connected to a data network or to a telephone line or the like.

A digital image comprises a plurality of points or pixels organised in successive rows, each of which is defined by a group of values stored in the memory of the electronic processor and identifying the colour characteristics of this point.

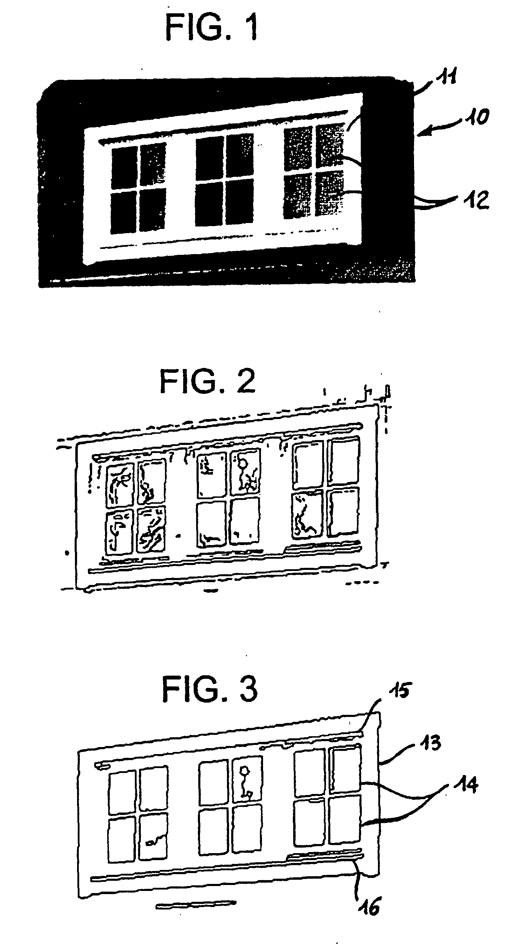

Known digital image acquisition devices (video cameras, digital cameras, colour scanners, etc.) generally encode each point of an image using a trio of values that expresses the level of the red, green and blue tones of the colour of the point (RGB code) which define the point's "colour coordinates". On the basis of this code, an algorithm for converting the colour coordinates of the point is applied and supplies as output a trio of values expressing the level of chromatic hue, luminance and saturation of the colour of this point (HLS code). This conversion is useful for the purposes of the subsequent stage of the method of the present invention which consists in converting a digital colour image into a digital image in grey tones, an example of which is shown in Fig. 1. Each point or pixel of the digital image 10 is associated with a data structure POINT containing the value POINT_VALUE which identifies only the relative luminance of the point. In the system of the present invention, therefore, in contrast to known systems, and despite the adaptation of the system for use in the colour management sector, the information on chromatic hue present in the original image is substantially disregarded or reduced solely to the level of luminance gradation.

The luminance data of the points of the digital image, stored in the field POINT_VALUE, are processed by an edge-detection algorithm implemented in the form of software on the electronic processor. A wide range of algorithms adapted for this purpose are known, whose description lies outside the scope of the present invention, which supply as output, for each point of'the digital image, a value representative of the luminance gradient of the neighbouring points. For the purposes of this description, without this being considered limiting, it will conventionally be assumed that this value is the higher, the more abrupt the luminance variation between the point in question and its neighbouring points, i.e. the higher the luminance gradient.

If the value of the luminance gradient of a certain point is high and exceeds a predetermined threshold value, this point is considered to be a border between zones of different luminance, which could be the border separating an object depicted in the digital image and the background or the border between two objects. The best edge-detection algorithms for the purposes of the present invention supply as output borders of a width substantially equal to a point or pixel, so as to define a map of substantially elongate and linear borders.

If the value of the luminance gradient in a point exceeds the above-mentioned threshold. this point is conventionally considered to be "black" and, for simplicity of explanation, will be referred to in the following description as a "border" point. In contrast, those points in which the above-mentioned value of the luminance gradient does not exceed the above-mentioned threshold value are conventionally defined as "white". At the end of the edge-detection algorithm, the data stored in POINT_VALUE contain the values of the luminance gradients of the various points of the image. These values are then interpreted as "black" or "white" (or in an equivalent manner as "true" or "false") values, by comparing them with the above-mentioned threshold value.

These values of white (false) and black (true) points are successively considered during a closure cycle, repeated one or more times, and in turn comprising a first stage of edge labelling (LabelEdges), a second stage of scanning to close (ScanToClose) and a third stage of definition of the neighbouring points (SetReaINeighbours). In more detail, during the stage of edge labelling, each point is considered on the basis of the intensity of the luminance gradient detected, in particular on the basis of whether it is black or white, in practice by reading the value of the datum POINT_VALUE. During this stage, a vector of data structures BORDER is generated, and is stored on the processor separately from the vector of structures POINT of the point data, in which those borders that show continuity, i.e. that have one or more neighbours, wherein a neighbour is understood as an adjacent "black" point or cluster of "black" points, are progressively listed. Each border is identified by a label BORDER_LABEL, in practice a progressive numerical value, and a length value BORDER_LENGTH, equal to the number of points or pixels from which the linear development of this border is composed, is assigned thereto. In a variant of the present invention, each border is also assigned a coherence value BORDER_COHERENCE, indicative of the regularity of the border which will, for instance, be the higher, the more the border is regular, and the lower, the more the border is disjointed or irregular. During the labelling stage LabelEdges, all the borders, whether closed or open, and of whatever length, are in practice identified, provided that at least one point of the border has a sufficiently significant gradient, i.e. above the predetermined threshold value.

Each point of the image is thus associated, in addition to the value POINT_VALUE, with a further label value POINT_LABEL which can assume the values LABEL_NONE (when the point is white and does not belong to any identified border), LABEL_BOUNDARY (when the point is located on the edge of the digital image), or a label value corresponding to the progressive identification list of the corresponding border as identified by the value BORDER_LABEL in the manner described above.

In the subsequent stage of scanning to close, it is attempted to close the incomplete borders to generate closed edges, by adding "black" points to the map of points processed by the edge-detection algorithm. Fig. 2 shows an example of the image obtained from the image 10 of Fig. 1, displaying the borders obtained at the end of the stage of scanning to close. In particular, use is made for this purpose of the border length value BORDER_LENGTH identified in the preceding labelling stage LabelEdge. A fairly rapid method consists in seeking to prolong a border only if its value BORDER_LENGTH is sufficiently long and higher than a threshold value that can be predetermined or determined on the basis of the mean of the length of borders identified and stored in the structures BORDER. Starting from an open end of one these open borders, a search is carried out among the surrounding points to identify a further black point, and thus to prolong the open end by adding intermediate black points. When considering these surrounding black points, points belonging to the same border to which the same end point in question also belongs are disregarded, in order to avoid closing the border on itself.

The distance in points or pixels to which reference is made when searching for another border from the end of an open border is proportional to the value of the length of the latter (BORDER_LENGTH), so as to avoid prolonging very short and often incidental fragments and to promote the closure of borders whose linear extension is of particular significance. During this stage, the choice of the path of closure of the open border, i.e. of the sequence of "white" points to be converted into "black" points, can be optimised in various ways. For instance, account could initially be taken of all the points that lie on the most direct trajectory or on the shortest path that joins the end of the open border to the target border. As an alternative, or in combination, account can be taken of the actual value of the luminance gradient of the adjacent points, even though these. have initially been considered as "white" points. This means that the various possible trajectories for joining the end of the open border with the target border include those containing points whose luminance gradient is slightly below the threshold separating the black points from the white points, but nevertheless greater than that of all the other surrounding points not belonging to the open border. For practical purposes, it is enough temporarily and locally to lower the threshold value of the luminance gradient in order to cause any further "black" points that can be used as an indication of the best path to be followed to close the open border to "emerge" from the cluster of "white" points adjacent to the end of the open border. In addition or as an alternative to the criteria for choosing the above-described closure path, account can be taken of the coherence value BORDER_COHERENCE in order to identify a border closure path that is most in keeping with the morphological characteristics of this border.

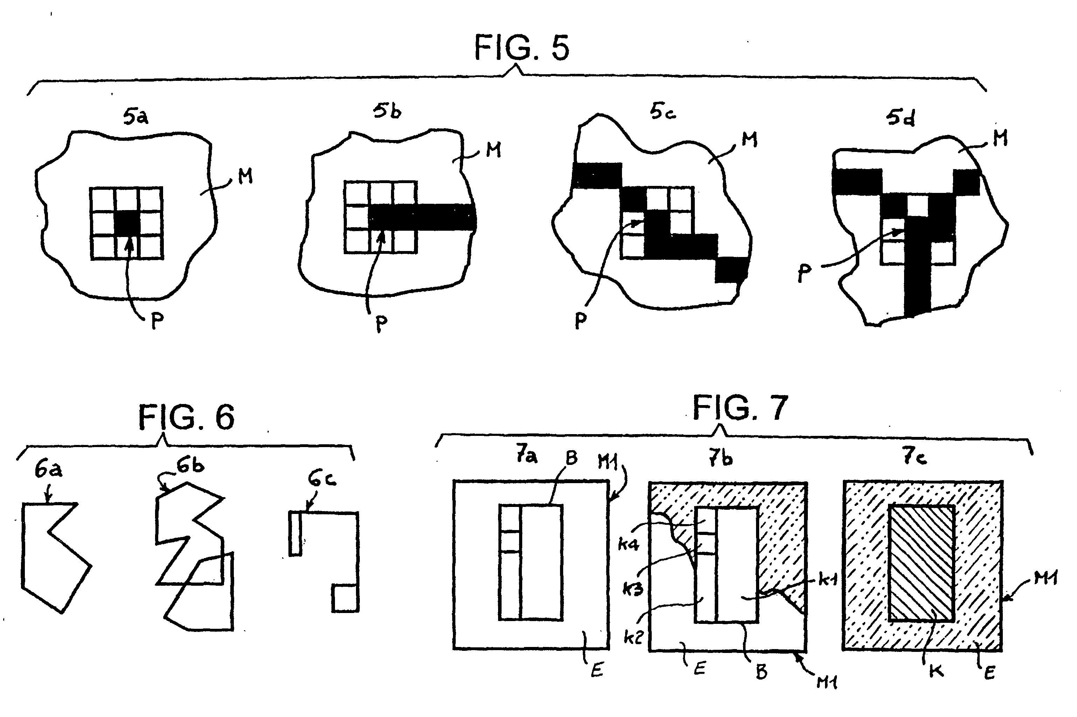

At the end of each repetition of the stage of scanning to close CloseToScan, the stage of definition of the neighbouring points SetRealNeighbours defines (when first run) or updates (when subsequently run) a numerical value POINT_NEIGHBOURS representative of the number of clusters of black points bordering each black point P of the digital image. In particular, with reference to Fig. 5, this numerical value is:
0: when the black point P in question has no neighbouring black point and is therefore an isolated point in the map M of the image, not belonging to any border (example 5a);
1: when the black point P in question is the end point of a branch of open border (example 5b);
2: when the black point P in question is a point belonging to a generic border (example 5c);
3 or 4:when the black point P in question is the point of intersection of several branches of a border (example 5d).

Following the stage of re-definition of the neighbouring points SetRealNeighbours, the data BORDER_LABEL and BORDER_LENGTH are updated, making further use of the above-mentioned stage of labelling of the borders LabelEdges, to reflect the fact that some borders have been combined to form closed edges in the preceding stage of scanning to close ScanToClose.

The closure cycle comprising the three stages described above is repeated until it is no longer possible to close any edges. In practice, a maximum number of possible repetitions is set in order to prevent any risk of overly long processing times. Experimentally, it has been found that a maximum of twenty or so repetitions provides very acceptable closure results.

At the end of the closure cycle, the digital image has a series of closed edges and open branches, the latter being formed by the residual open borders that were too short or too distant from other borders to be closed in the closure cycle. Fig. 2 shows an example of the graphical representation of the resulting digital image. A successive stage of the system of the present invention consists in the pruning of the open branches. For this purpose, account is taken of the ends of the borders or branches that have remained open despite the application of the closure cycle, and in particular of the black points for which the value POINT_NEIGHBOURS is equal to unity. From the end of each open branch and proceeding backwards along this branch, pruning takes place by decreasing the value POINT_NEIGHBOURS of each black point of the open branch by one unit, until an intersection, for which the value of POINT_NEIGHBOURS, although decreased by one unit, still remains above one, is encountered. In practice, the starting point is the end of an open or dead branch where the value of POINT_NEIGHBOURS decreases from one to zero. The adjacent black point is then evaluated, decreasing the value of POINT_NEIGHBOURS by one unit for this point as well. There are two possibilities at this point: if the new value of POINT_NEIGHBOURS is equal to unity, then this black point is the new end of the open branch and its corresponding adjacent black point is then considered, or the new value of POINT_NEIGHBOURS is greater than unity and the pruning procedure is then discontinued because an intersection has been encountered.

At the end of a pruning operation, all the points of a dead branch will have a POINT_NEIGHBOURS value equal to zero, apart from the "node" point, i.e. the black point located at the intersection of the dead branch with another branch or edge. In practice, at the end of the pruning operation, all the points of the digital image belonging to closed edges will have a POINT_NEIGHBOURS value equal to or greater than two. For the successive stages of the method it is sufficient therefore to take account solely of the POINT_NEIGHBOURS value of each point.

The method described up to now is intended to identify closed edges of non-negligible length and to label them, making it possible to start from the map of borders detected by the edge-detection algorithm (Fig. 2) in order to close any edges that are open as a result of small discontinuities that cannot be detected from the original digital image (Fig. 1), eliminating the open branches that have not been closed (Fig. 3).

Some areas, albeit only edges closed one or more times, have not, however, been identified. As shown in Fig. 6, the method up to this point has labelled as closed edges both simple edges 6a and the edges 6b and 6c which are also closed but more complex. This latter type of closed edge 6c is defined as a "lens edge" and comprises a border whose ends are closed on themselves to form two "lenses" or eyes, connected together by the intermediate section of the border. These lens edges are problematic and often impede the elimination of borders that do not define closed edges from the data of an image. It is therefore preferable to carry out a stage of elimination of lens edges in order to try to remove spurious elements from the digital image data.

The stage of elimination of the lens edges is in practice indispensable when, for the construction of masks, use is made of known methods for the construction of polygons from ordered series of points. By definition, these polygons are bounded by closed edges. In this case, unless the edges are completely eliminated, the results of the final masking will be unpredictable and incorrect. In the preferred embodiment of the invention, however, as specified in detail below, it is not strictly necessary to remove the lens edges, since the masking of the digital image can be carried out by means of a stage of definition of simple closed areas, without the need to order the points of the closed edges that bound them.

In the stage of elimination of the lens edges it is possible to prune the intermediate section that unites the two end eyes, or to assimilate each end eye with the end of an open border, which is closed in a manner substantially similar to that described with reference to the cycle of closure of open borders. The choice of the type of method to be used to eliminate the lens edges depends to a large extent on the length of the intermediate section related to the length of the end eyes. Advantageously, the stage of elimination of the lens edges may be included within the closure cycle as described above, prior to the pruning stage, so as also to take account of the borders that have a single end eye, of small dimension, that can be assimilated with the end of an open border.
At the end of the cycle of closure, pruning and possible elimination of lens edges, the masking data are collected in the form of an object vector, each of which contains the data relating to an individual closed edge that has been detected, in particular the value of its length BORDER_LENGTH and the list of the points belonging thereto, on the basis of the labelling of these points by means of the value POINT_LABEL. The digital image is scanned according to a sequence from the top-left to the bottom-right in order to always securely find, in the succession of closed edges, an outer edge (container) before a corresponding edge contained therein. This method consists in listing the various closed edges in an ordered sequence. The individual points belonging to the various edges are not collected, however, in any particular order, since this is not essential for the purposes of the present invention and makes it possible to speed up the masking method.

Subsequently, the points of each edge, taken in an ordered manner from the ordered sequence of edges obtained from the top-left to bottom-right scanning as described above, are added individually to a temporary auxiliary map. In this map, each point or pixel is coloured, for instance in white or black, or in two other distinct colours, depending on the "black" or "white" value of the value POINT_VALUE determined in the previous stages. A successive operation to fill the zone external to the edges with a colour different from the first two colours makes it possible immediately to identify the area inside and the area outside the edge which defines the broadest perimeter of the figure. This stage is shown in diagram form in Fig. 7, in which 7a shows an auxiliary map M1 to which the points of a closed edge B have been added. Fig. 7b shows a an intermediate stage of the operation to fill the zone E external to the closed edge B, and Fig. 7c shows the resulting masking area K identified by the filling operation. The filling stage is repeated for each closed edge identified in the previous stages, thereby identifying a sequence of closed areas.

The individual closed areas identified on the temporary map are input into a common map, in their original position, with reference to the position data of the points of the original digital image. The areas are input into the common map in the order defined by the ordered sequence of edges identified by the top-left to bottom-right scanning, so as to be able simply to verify whether any one of their points matches, i.e. coincides with, an internal point of an area defined by a previous edge in the above-mentioned sequential order. It is thus possible simply to verify whether each area is or is not contained within other closed areas previously input into the common map, thereby making it possible to organise these areas according to a hierarchy of container-contained areas, for instance to manage any holes in the masks. For instance, the outermost areas can be considered to be full, while the successive areas in the container-contained hierarchy, the so-called "daughter" areas, can be considered as holes in the areas higher up the hierarchy, which are thus "emptied" in the zone occupied by the daughter area that they contain. In the example of Fig. 3, the closed edge 13 defines the inner area of the frame 11 of the window shown in the image of Fig. 1, while the closed edges 14 define holes in this frame 11, corresponding to the glass panes 12 of the window of Fig. 1. The method of the present invention thus makes it possible to achieve the objective of defining in a simple and rapid manner, without intervention by the user, a mask for the object formed by the frame 11 of the window depicted in the image of Fig. 1.

At this point, the user may for instance select a colour at will from the database stored on the electronic processor and apply this colour to the mask defining the frame 11 in order to change, on the original colour image, only the chromatic hue of this frame. Moreover, the luminance data of the points of the original image are still available, so that the luminance parameter of the new colour selected by the user may be graduated, point by point, within the mask of the frame 11, in order to obtain a very realistic colouring effect of the digital image that respects the light and shade contrasts of the real subject as originally photographed.

The above-described procedure, which is fully automatic, may be integrated with a stage of interactive modification guided by the user. Depending on the characteristics of the original image, for instance, the border closure cycle could have generated closed edges surplus to actual requirements, for instance the closed edge 15 of Fig. 3. It is sufficient to provide a device for modifying the borders that works on the map of borders of Fig. 3, guided by the inputting device, for instance a mouse. By using this device of an "eraser" type it is possible to cancel some points of the closed edge 15 to convert it into an open border. Subsequent transition through the automatic pruning stage will eliminate the edge 15 which the user has changed into an open border.

In contrast, the border map of Fig. 2, obtained at the end of the closure cycle prior to the pruning stage may be displayed to a user who wishes to close any borders that are still open. For this purpose use can be made of a device of the "stylus" type which makes it possible to draw_lines of a width equal to a point or a pixel, blackening the points indicated by the user on the map by means of an interactive inputting device such as a mouse.

The stage of filling and definition of the hierarchy of closed areas may also be made interactive with a user. As shown in Fig. 7, the automatic filling procedure considers only the closed area surrounded by the most peripheral profile of an edge B closed several times. In the final mask K, the sub-areas K1, K2, K3 and K4 of example 7b are ignored. The masking map, for instance that shown by 7b in Fig. 7, may be displayed to a user who, by means of an inputting device, may indicate one of the points inside one of the sub-areas K1, K2, K3, K4 in order to fill its interior, aggregate it with the external area E and remove it from the closed masking area K.

Without prejudice to the principle of the invention, its embodiments and details of construction may be widely varied with respect to those described and illustrated without thereby departing from the scope of the present invention as defined in the appended claims.

## Claims

1. A method for identifying closed areas and defining masks in a digital image, comprising the following stages:
- dividing the image into a plurality of points and storing values representative at least of the relative luminance of each point of the image in the memory of an electronic processor,
- storing values representative of the luminance gradient of each point of the image, determined on the basis of the luminance values of each point and of the surrounding points, in the memory of the electronic processor,
- preparing an intermediate threshold value, in order to sub-divide the luminance gradient values into a first and a second group,
- storing in the memory of the electronic processor an ordered series of values identifying borders, each defined by a cluster of adjacent points whose gradient value belongs to the first group of luminance gradient values,
- selecting closed edges, defined by the borders whose points all have at least two neighbours whose luminance gradient values belong to the first group,
- storing in the memory of the electronic processor the points of the image that are included within each edge, taken in succession, in order to define masking areas of the digital image corresponding to objects depicted in this image.

2. A method for identifying closed areas and defining masks in a digital image as claimed in claim 1, **characterised in that**, prior to the stage of selection of the closed edges, it comprises a closure cycle including the stages, repeated one or more times, of:
- identifying the end points of open borders, defined as points of a border that have a single adjacent point whose luminance gradient values belong to the first group,
- selecting, among the points whose luminance gradient values belong to the second group, a cluster of points defining a closure path between the end point of the open border and a point of a border that is not immediately adjacent,
- identifying the points of the cluster selected during the previous stage as belonging to the same border as the end point,
- updating the ordered series of values identifying the borders.

3. A method for identifying closed areas and defining masks in a digital image as claimed in claim 2, **characterised in that** in the cycle of closure of open borders, the luminance gradient values of the second group of points belonging to the closure path are converted into a value included in the range of values of the first group.

4. A method for identifying closed areas and defining masks in a digital image as claimed in claim 2, **characterised in that** in the cycle of closure of open borders, the cluster of points selected in the second group have luminance gradient values differing only slightly from the predetermined threshold value.

5. A method for identifying closed areas and defining masks in a digital image as claimed in claim 2, **characterised in that** in the cycle of closure of open borders, the choice of the cluster of points selected in the second group depends on a coherence value representative of the degree of regularity of this border.

6. A method for identifying closed areas arid defining masks in a digital image as claimed in claim 2, **characterised in that** the stage of storing the ordered series of values identifying borders comprises storing the length of these borders, defined as the number of points belonging to the first group that combine to define each border, the distance in points or pixels to which reference is made when searching for another border from the end point of an open border being proportional to the length of the latter to avoid prolonging very short and often incidental border fragments and to promote the closure of borders whose linear extension is of particular significance.

7. A method for identifying closed areas and defining masks in a digital image as claimed in claim 1, **characterised in that**, following the stage of selection of the closed edges, it comprises a stage of pruning of the open borders.

8. A method for identifying closed areas and defining masks in a digital image as claimed in claim 7, **characterised in that** it comprises a stage of identification and storing, for each point of the image, of the number of neighbouring points or clusters of points belonging to a border, defined by the points whose luminance gradient value is greater than the predetermined threshold value and **in that**, in the pruning stage, the value of the number of points or clusters of points neighbouring each point of the border is updated from the end of each open border and proceeding backwards along this border, by decreasing it by one unit until a value is found that, although small, is still greater than unity at the location of a node or point of intersection of a border.

9. A method for identifying closed areas and defining masks in a digital image as claimed in claim 1, **characterised in that** it comprises a first preliminary stage of acquisition of a colour image by digitisation means functionally connected to the electronic processor, a second preliminary stage of storing a sequence of values representative of colour parameters of points of this image, and a third preliminary stage of conversion of these colour parameter values into equivalent values comprising, for each point of the image, at least one value representative of the luminance of the point.

10. A method for identifying closed areas and defining masks in a digital image as claimed in claim 1, **characterised in that** the intermediate threshold value is proportional to the mean of the luminance gradient values of all the points of the digital image.

11. A method for identifying closed areas and defining masks in a digital image as claimed in claim 7, **characterised in that**, following the pruning stage, it comprises a further stage of elimination of lens edges, defined by edges whose ends are closed as eyes and are connected by an intermediate border section.

12. A method for identifying closed areas and defining masks in a digital image as claimed in claim 11, **characterised in that** the stage of elimination of the lens edges includes the elimination of the intermediate border section or selectively, as an alternative, the closure of the eye ends by means of an additional border closure section.

13. A method for identifying closed areas and defining masks in a digital image as claimed in claim 1, **characterised in that** prior to the stage of storing the points of the image that are included within each edge, the closed edges are organised in an ordered sequence, the points of each closed edge then being input into a temporary map in order to identify, by filling the area external thereto, the area inside each edge.

14. A method for identifying closed areas and defining masks in a digital image as claimed in claim 14, **characterised in that** following the identification of the area inside each edge, the points of these areas are input into a common map in sequence according to the order of the sequential order of the closed edges, checking, for each area, whether one of its points does or does not coincide with a point of an area relating to a prior edge in the sequence, to identify a hierarchical order of closed container-contained areas.

15. A method for identifying closed areas and defining masks in a digital image as claimed in claim 1, **characterised in that** it comprises at least one interactive modification of the values of points, borders and/or closed areas by a user, carried out by means of inputting means connected to the electronic processor, comprising a stage of display of the borders on video means and including at least one operation selected from the group of operations comprising:
- an operation to open closed edges, by modifying the values stored on the processor and associated with points belonging to a closed edge and identified by the inputting means,
- an operation to close open edges, by modifying the values stored on the processor and associated with points whose luminance gradient values are lower than the predetermined threshold value and that are identified by the user by means of the inputting means,
- an operation to assign a closed area to a group of areas of different hierarchy, by identification by the user, by means of the inputting means, of at least one point of this closed area.

## Patentansprüche

1. Verfahren zum Identifizieren geschlossener Bereiche und zum Definieren von Masken in einem digitalen Bild, mit den folgenden Phasen:
Aufteilen des Bildes in mehrere Punkte und Speichern von Werten, die mindestens die relative Luminanz jedes Punktes des Bildes darstellen, im Speicher eines elektronischen Prozessors,
Speichern von Werten, die den Luminanzgradienten jedes Punktes des Bildes darstellen, der auf der Grundlage der Luminanzwerte jedes Punktes und der umgebenden Punkte bestimmt wird, im Speicher des elektronischen Prozessors,
Einrichten eines Zwischen-Schwellenwerts, um die Luminanzgradientenwerte in eine erste und eine zweite Gruppe zu unterteilen,
Speichern, im Speicher des elektronischen Prozessors, einer geordneten Reihe von Werten, die Grenzen identifizieren, die jeweils durch ein Cluster benachbarter Punkte, deren Gradientenwert zu der ersten Gruppe von Luminanzgradientenwerten gehört, definiert werden,
Wählen geschlossener Ränder, die durch die Grenzen definiert werden, deren Punkte alle mindestens zwei Nachbarn aufweisen, deren Luminanzgradientenwerte zu der ersten Gruppe gehören,
Speichern, im Speicher des elektronischen Prozessors, der Punkte des Bildes, die in jedem Rand enthalten sind und der Reihe nach genommen werden, um Maskierungsbereiche des digitalen Bildes zu definieren, die in diesem Bild abgebildeten Objekten entsprechen.

2. Verfahren zum Identifizieren geschlossener Bereiche und zum Definieren von Masken in einem digitalen Bild nach Anspruch 1, **dadurch gekennzeichnet, daß** es vor der Phase des Wählens der geschlossenen Ränder einen Abschlußzyklus umfaßt, der die folgenden Phasen enthält, die einoder mehrmals wiederholt werden:
Identifizieren der Endpunkte offener Grenzen, die als Punkte einer Grenze definiert sind, die einen einzigen benachbarten Punkt aufweisen, dessen Luminanzgradientenwerte zu der ersten Gruppe gehören,
Wählen, unter den Punkten, deren Luminanzgradientenwerte zu der zweiten Gruppe gehören, eines Clusters von Punkten, das einen Abschlußweg zwischen dem Endpunkt der offenen Grenze und einem Punkt einer Grenze, der nicht unmittelbar benachbart ist, definiert,
Identifizieren der Punkte des während der vorherigen Phase gewählten Clusters, die zu derselben Grenze wie der Endpunkt gehören,
Aktualisieren der geordneten Menge von Werten, die die Grenzen identifizieren.

3. Verfahren zum Identifizieren geschlossener Bereiche und zum Definieren von Masken in einem digitalen Bild nach Anspruch 2, **dadurch gekennzeichnet, daß** in dem Zyklus des Abschlusses offener Grenzen die Luminanzgradientenwerte der zweiten Gruppe von Punkten, die zu dem Abschlußweg gehören, in einen Wert umgewandelt werden, der in dem Wertebereich der ersten Gruppe enthalten ist.

4. Verfahren zum Identifizieren geschlossener Bereiche und zum Definieren von Masken in einem digitalen Bild nach Anspruch 2, **dadurch gekennzeichnet, daß** in dem Zyklus des Abschlusses offener Grenzen das Cluster von Punkten, das in der zweiten Gruppe gewählt wird, Luminanzgradientenwerte aufweist, die sich nur geringfügig von dem vorbestimmten Schwellenwert unterscheiden.

5. Verfahren zum Identifizieren geschlossener Bereiche und zum Definieren von Masken in einem digitalen Bild nach Anspruch 2, **dadurch gekennzeichnet, daß** in dem Zyklus des Abschlusses offener Grenzen die Wahl des Clusters von Punkten, das in der zweiten Gruppe gewählt wird, von einem Kohärenzwert abhängt, der den Grad der Regularität dieser Grenze darstellt.

6. Verfahren zum Identifizieren geschlossener Bereiche und zum Definieren von Masken in einem digitalen Bild nach Anspruch 2, **dadurch gekennzeichnet, daß** die Phase des Speicherns der geordneten Reihe von Werten, die Grenzen identifizieren, das Speichern der Länge dieser Grenzen umfaßt, die als die Anzahl von Punkten, die zu der ersten Gruppe gehören, die zusammen jede Grenze definieren, definiert ist, wobei der Abstand in Punkten oder Pixeln, auf den Bezug genommen wird, wenn von dem Endpunkt einer offenen Grenze aus nach einer anderen Grenze gesucht wird, proportional zu der Länge der offenen Grenze ist, um ein Verlängern sehr kurzer und häufig zufälliger Grenzfragmente zu vermeiden und den Abschluß von Grenzen, deren lineare Erstreckung von besonderer Bedeutung ist, zu fördern.

7. Verfahren zum Identifizieren geschlossener Bereiche und zum Definieren von Masken in einem digitalen Bild nach Anspruch 1, **dadurch gekennzeichnet, daß** es im Anschluß an die Phase des Wählens der geschlossenen Ränder eine Phase des Stutzens der offenen Grenzen umfaßt.

8. Verfahren zum Identifizieren geschlossener Bereiche und zum Definieren von Masken in einem digitalen Bild nach Anspruch 7, **dadurch gekennzeichnet, daß** es, für jeden Punkt des Bildes eine Phase des Identifizierens und des Speicherns der Anzahl von benachbarten Punkten oder Clustern von Punkten, die zu einer Grenze gehören, die durch die Punkte definiert ist, deren Luminanzgradientenwert größer als der vorbestimmte Schwellenwert ist, umfaßt und daß in der Stutzphase der Wert der Anzahl von Punkten oder Clustern von Punkten, die jedem Punkt der Grenze benachbart sind, vom Ende jeder offenen Grenze aus aktualisiert und entlang dieser Grenze zurückgeschritten wird, indem sie solange um eine Einheit verkleinert wird, bis ein Wert gefunden wird, der zwar klein ist, aber an der Position eines Knotens oder eines Schnittpunkts einer Grenze immer noch größer als eins ist.

9. Verfahren zum Identifizieren geschlossener Bereiche und zum Definieren von Masken in einem digitalen Bild nach Anspruch 1, **dadurch gekennzeichnet, daß** es eine erste vorbereitende Phase des Erfassens eines Farbbildes durch ein wirksam mit dem elektronischen Prozessor verbundenes Digitalisierungsmittel und eine zweite vorbereitende Phase des Speicherns einer Folge von Werten, die Farbparameter von Punkten dieses Bildes darstellen, und eine dritte vorbereitende Phase des Umwandelns dieser Farbparameterwerte in äquivalente Werte, die für jeden Punkt des Bildes mindestens einen die Luminanz des Punkts darstellenden Wert umfassen, umfaßt.

10. Verfahren zum Identifizieren geschlossener Bereiche und zum Definieren von Masken in einem digitalen Bild nach Anspruch 1, **dadurch gekennzeichnet, daß** der Zwischen-Schwellenwert proportional zu dem Mittelwert der Luminanzgradientenwerte aller Punkte des digitalen Bildes ist.

11. Verfahren zum Identifizieren geschlossener Bereiche und zum Definieren von Masken in einem digitalen Bild nach Anspruch 7, **dadurch gekennzeichnet, daß** es im Anschluß an die Stutzphase eine weitere Phase des Eliminierens von Linsenrändern umfaßt, die durch Ränder definiert werden, deren Enden wie Augen geschlossen sind und die durch einen Zwischen-Grenzabschnitt verbunden sind.

12. Verfahren zum Identifizieren geschlossener Bereiche und zum Definieren von Masken in einem digitalen Bild nach Anspruch 11, **dadurch gekennzeichnet, daß** die Phase des Eliminierens der Linsenränder das Eliminieren des Zwischen-Grenzabschnitts oder selektiv als eine Alternative den Abschluß der Augenenden mittels eines zusätzlichen Grenzabschlußabschnitts umfaßt.

13. Verfahren zum Identifizieren geschlossener Bereiche und zum Definieren von Masken in einem digitalen Bild nach Anspruch 1, **dadurch gekennzeichnet, daß** vor der Phase des Speicherns der in jedem Rand enthaltenen Punkte der Bildes die geschlossenen Ränder zu einer geordneten Folge organisiert werden, wobei die Punkte jedes geschlossenen Rands dann in eine temporäre Abbildung eingegeben werden, um durch Füllen des äußeren Bereichs davon den Bereich innerhalb jedes Rands zu identifizieren.

14. Verfahren zum Identifizieren geschlossener Bereiche und zum Definieren von Masken in einem digitalen Bild nach Anspruch 14, **dadurch gekennzeichnet, daß** im Anschluß an die Identifizierung des Bereich innerhalb jedes Rands die Punkte dieser Bereiche der Reihe nach gemäß der Reihenfolge der sequentiellen Reihenfolge der geschlossenen Ränder in eine gemeinsame Abbildung eingegeben werden, wobei für jeden Bereich geprüft wird, ob einer seiner Punkte mit einem Punkt eines einen vorherigen Rand in der Folge betreffenden Gebietes zusammenfällt oder nicht, um eine hierarchische Reihenfolge geschlossener behälterenthaltener Bereiche zu identifizieren.

15. Verfahren zum Identifizieren geschlossener Bereiche und zum Definieren von Masken in einem digitalen Bild nach Anspruch 1, **dadurch gekennzeichnet, daß** es mindestens eine interaktive Modifikation der Werte von Punkten, Grenzen und/oder geschlossenen Bereichen durch einen Benutzer umfaßt, die mittels eines mit dem elektronischen Prozessor verbundenen Eingabemittels ausgeführt wird, mit einer Phase des Anzeigens der Grenzen auf einem Videomittel und einschließlich mindestens einer aus der folgenden Gruppe von Operationen ausgewählten Operation:
eine Operation zum Öffnen geschlossener Ränder durch Modifizieren der Werte, die auf dem Prozessor gespeichert sind und Punkten zugeordnet sind, die zu einem geschlossenen Rand gehören und durch das Eingabemittel identifiziert werden,
eine Operation zum Schließen offener Ränder durch Modifizieren der Werte, die auf dem Prozessor gespeichert sind und Punkten zugeordnet sind, deren Luminanzgradientenwerte niedriger als der vorbestimmte Schwellenwert sind und die vom Benutzer mittels des Eingabemittels identifiziert werden,
eine Operation zum Zuweisen eines geschlossenen Bereichs zu einer Gruppe von Bereichen verschiedener Hierarchie durch Identifizierung durch den Benutzer mindestens eines Punkts dieses geschlossenen Bereichs mittels des Eingabemittels.

## Revendications

1. Procédé pour identifier des zones fermées et pour définir des masques dans une image numérique, comprenant les étapes de :
- division de l'image en une pluralité de points et stockage des valeurs représentatives au moins de la luminance relative à chaque point de l'image dans la mémoire d'un processeur électronique,
- stockage des valeurs représentatives du gradient de luminance de chaque point de l'image, déterminé sur la base des valeurs de luminance de chaque point et des points environnants, dans la mémoire du processeur électronique,
- préparation d'une valeur de seuil intermédiaire, afin de subdiviser les valeurs de gradient de luminance en un premier et un second groupe,
- stockage dans la mémoire du processeur électronique d'une série ordonnée de valeurs identifiant des limites, chacune définie par un groupe de points adjacents dont la valeur de gradient appartient au premier groupe des valeurs de gradient de luminance,
- sélection des bords fermés, définis par les limites dont des points ont tous au moins deux voisins dont les valeurs de gradient de luminance appartiennent au premier groupe,
- stockage dans la mémoire du processeur électronique des points de l'image qui sont compris dans chaque bord, pris successivement, afin de définir des zones de masquage de l'image numérique correspondant aux objets décrits dans cette image.

2. Procédé pour identifier des zones fermées et pour définir des masques dans une image numérique selon la revendication 1, **caractérisé en ce que**, avant l'étape de sélection des bords fermés, il comprend un cycle de fermeture comprenant les étapes, répétées une fois ou plusieurs fois, de :
- identification des points de fin des bords ouverts, définis comme des points d'un bord qui ont un point adjacent unique dont les valeurs de gradient de luminance appartiennent au premier groupe,
- sélection, parmi les points dont les valeurs de gradient de luminance appartiennent au second groupe, d'un groupe de points définissant un chemin de fermeture entre le point d'extrémité d'un bord ouvert et un point d'un bord qui n'est pas immédiatement adjacent,
- identification des points du groupe sélectionné pendant l'étape précédente comme appartenant à la même limite que le point d'extrémité,
- mise à jour de la série ordonnée des valeurs identifiant les limites.

3. Procédé pour identifier des zones fermées et pour définir des masques dans une image numérique selon la revendication 2, **caractérisé en ce que** dans le cycle de fermeture des limites ouvertes, les valeurs de gradient de luminance du second groupe de points appartenant au chemin de fermeture sont converties en une valeur comprise dans la plage des valeurs du premier groupe.

4. Procédé pour identifier des zones fermées et pour définir des masques dans une image numérique selon la revendication 2, **caractérisé en ce que** dans le cycle de fermeture des limites ouvertes, le groupe de points sélectionné dans le second groupe a des valeurs de gradient de luminance ne différant que légèrement de la valeur de seuil prédéterminée.

5. Procédé pour identifier des zones fermées et pour définir des masques dans une image numérique selon la revendication 2, **caractérisé en ce que** dans le cycle de fermeture des limites ouvertes, le choix du groupe de points sélectionné dans le second groupe dépend d'une valeur de cohérence représentative du degré de régularité de cette limite.

6. Procédé pour identifier des zones fermées et pour définir des masques dans une image numérique selon la revendication 2, **caractérisé en ce que** l'étape de stockage de la série ordonnée des valeurs identifiant des limites comprend le stockage de la longueur de ces limites, définie comme le nombre de points appartenant au premier groupe qui associe pour définir chaque limite, la distance en points ou des pixels à laquelle on se réfère lors de la recherche d'une autre limite à partir d'un point d'extrémité d'une limite ouverte étant proportionnelle à la longueur de la dernière pour éviter le prolongement très court de fragments de limite souvent accidentels et pour favoriser la fermeture des limites dont l'extension linéaire est d'une signification particulière.

7. Procédé pour identifier des zones fermées et pour définir des masques dans une image numérique selon la revendication 1, **caractérisé en ce que**, après l'étape de sélection des bords fermés, il comprend une étape d'élagage des limites ouvertes.

8. Procédé pour identifier des zones fermées et définir des masques dans une image numérique selon la revendication 7, **caractérisé en ce qu'**il comprend une étape d'identification et de stockage, pour chaque point de l'image, du nombre de points voisins ou de groupes de points appartenant à une limite, défini par les points dont la valeur de gradient de luminance est supérieure à la valeur de seuil prédéterminée et **en ce que**, dans l'étape d'élagage, la valeur du nombre de points ou de groupes de points voisins de chaque point de la limite est mise à jour à partir de l'extrémité de chaque limite ouverte, et en reculant le long de cette limite, en la diminuant d'une unité jusqu'à ce que la valeur soit trouvée qui, bien que petite, est encore supérieure à l'unité à l'emplacement d'un noeud ou d'un point d'intersection d'une limite.

9. Procédé pour identifier des zones fermées et pour définir des masques dans une image numérique selon la revendication 1, **caractérisé en ce qu'**il comprend une première étape préliminaire d'acquisition d'une image de couleur par un moyen de numérisation fonctionnellement raccordé au processeur électronique, une seconde étape préliminaire de stockage d'une séquence de valeurs représentatives de paramètres de points de couleur de cette image, et une troisième étape préliminaire de conversion de ces valeurs de paramètre de couleur en valeurs équivalentes comprenant, pour chaque point de l'image, au moins une valeur représentative de la luminance de point.

10. Procédé pour identifier des zones fermées et pour définir des masques dans une image numérique selon la revendication 1, **caractérisé en ce que** la valeur de seuil intermédiaire est proportionnelle au moyen des valeurs de gradient de luminance de tous les points de l'image numérique.

11. Procédé pour identifier des zones fermées et pour définir des masques dans une image numérique selon la revendication 7, **caractérisé en ce que**, après l'étape d'élagage, il comprend une autre étape d'élimination des bords de lentille, définis par les bords dont les extrémités sont fermées comme des yeux et sont raccordées par une section de limite intermédiaire.

12. Procédé pour identifier des zones fermées et pour définir des masques dans une image numérique selon la revendication 11, **caractérisé en ce que** l'étape d'élimination des bords de lentille comprend l'élimination de la section de limite intermédiaire ou sélectivement, comme une alternative, la fermeture des extrémités des yeux au moyen d'une section de fermeture de limite supplémentaire.

13. Procédé pour identifier des zones fermées et pour définir des masques dans une image numérique selon la revendication 1, **caractérisé en ce qu'**avant l'étape de stockage les points de l'image sont compris dans chaque bord, les bords fermés sont organisés dans une séquence ordonnée, les points de chacun des bords fermés étant alors introduits dans une carte temporaire afin d'identifier, en remplissant la zone externe de celle-ci, les zones à l'intérieur de chaque bord.

14. Procédé pour identifier des zones fermées et pour définir des masques dans une image numérique selon la revendication 14, **caractérisé en ce qu'**après l'identification de la zone à l'intérieur de chaque bord, les points de ces zones sont introduits dans une carte commune en séquence selon l'ordre de l'ordre séquentiel des bords fermés, contrôle, pour chaque zone, si un de ces points coïncide ou ne coïncide pas avec un point d'une zone concernant un bord intérieur de la séquence, pour identifier un ordre hiérarchique des zones fermées contenant-contenu.

15. Procédé pour identifier des zones fermées et pour définir des masques dans une image numérique selon la revendication 1, **caractérisé en ce qu'**il comprend au moins une modification interactive des valeurs de points, des limites et/ou des zones fermées par un utilisateur, réalisé au moyen d'un moyen d'introduction raccordé au processeur électronique, comprenant une étape d'affichage des limites sur le moyen vidéo et comprenant au moins une opération sélectionnée à partir du groupe des opérations comprenant :
- une opération pour ouvrir des bords fermés, en modifiant les valeurs stockées dans le processeur et associées à des points appartenant à un bord fermé et identifiées par le moyen d'introduction,
- une opération pour fermer des bords ouverts, en modifiant les valeurs stockées dans le processeur et associées à des points dont les valeurs de gradient de luminance sont inférieures à la valeur de seuil prédéterminée et qui sont identifiées par l'utilisateur au moyen du moyen d'entrée,
- une opération pour assigner une zone fermée à un groupe de zones d'une hiérarchie différente, par l'identification par l'utilisateur, par l'intermédiaire du moyen d'entrée, d'au moins un point de cette zone fermée.
